## Europäisches Patentamt
## European Patent Office
## Office européen des brevets

(19)

(11) Numéro de publication: **0 279 719
B1**

(12)                    FASCICULE DE BREVET EUROPEEN

(45) Date de publication du fascicule du brevet:
31.10.90

(21) Numéro de dépôt: 88400133.0

(22) Date de dépôt: 22.01.88

(51) Int. Cl.⁵: **C02F 3/04**

(54) **Procédé et dispositif pour l'épuration d'eaux polluées.**

(30) Priorité: 27.01.87 FR 8700912

(43) Date de publication de la demande:
24.08.88 Bulletin 88/34

(45) Mention de la délivrance du brevet:
31.10.90 Bulletin 90/44

(84) Etats contractants désignés:
**BE DE ES GB IT NL**

(56) Documents cités:
EP-A- 0 066 898
FR-A- 2 358 361
GB-A- 1 347 965
US-A- 4 465 594

(73) Titulaire: **BURGEAP, 70, rue Mademoiselle,
F-75015 Paris(FR)**

(72) Inventeur: **Guerin, Bertrand, 1, rue d'Enfer,
F-02850 Jaulgonne(FR)**

(74) Mandataire: **Tony-Durand, Serge, Cabinet
Tony-Durand 77, rue Boissière, F-75116 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à un procédé pour l'épuration d'eaux fortement polluées, du genre notamment des eaux résiduaires d'installations industrielles, et plus généralement des eaux usées de rejet d'une collectivité ou d'une agglomération urbaine ou autre.

On applique déjà depuis de nombreuses années, dans les techniques d'épuration par le sol des eaux polluées des procédées permettant de diminuer leur pouvoir colmatant, tel le dégrillage des éléments flottants, le tamisage des matières en suspension, la décantation des sables ainsi que des graisses et des huiles.

Les eaux ainsi prétraitées percolent ensuite un sol non saturé où elles s'épurent des matières polluantes résiduelles qu'elles contiennent, notamment les matières organiques, par le biais d'une oxydation microbienne aérobie.

Dans le cas notamment des dispositifs d'assainissement individuel ou encore regroupé, le sol peut être naturellement perméable, ou encore être un sol artificiellement reconstitué comme c'est le cas dans les dispositifs du type à "lit d'infiltration"; il présente alors une granulométrie appropriée, lui conférant une perméabilité suffisante à l'air et un bon pouvoir de fixation de la microflore épuratrice.

Dans le cas notamment des bassins d'infiltration contrôlée, les eaux résiduaires affinées par un tel prétraitement, et convenablement réparties, percolent une couche filtrante perméable dont l'épaisseur et la nature sont déterminées de telle manière que les matières polluantes résiduelles biodégradables contenues dans ces eaux soient progressivement éliminées par la microflore épuratrice présente au sein de cette couche non saturée, constituant le fond du bassin; la couche filtrante est généralement formée par un sol granulaire rapporté, mais elle peut, le cas échéant, être également formée par des matériaux synthétiques à forte surface spécifique, améliorant encore leur capacité épuratrice.

En général, l'eau dépolluée s'élimine au sein d'un terrain perméable sous-jacent où elle recharge une nappe d'eau souterraine; mais, le cas échéant, ces eaux peuvent être récupérées au moyen d'un réseau de drains de collecte disposés à la base de ces dispositifs pour être recyclées ou encore pour être rejetées vers un cours d'eau.

Or, on sait cependant que l'activité épuratrice de la flore microbienne d'un sol vis-à-vis d'une charge polluante qui percole un milieu perméable non saturé présente une efficacité qui diminue rapidement en raison de la décroissance d'oxygène libre dans l'atmosphère du milieu épurateur, la consommation maximale d'oxygène étant caractérisée par un coefficient connu, dénommé "demande chimique en oxygène" ou "DCO", correspondant à une oxydation totale du carbone organique biodégradable.

Il est donc nécessaire, pour obtenir un facteur d'épuration acceptable, de mettre un tel bassin de filtration en chomage pendant des durées déterminées, alternant avec des périodes où les eaux polluées sont infiltrées dans ce bassin, en stoppant ainsi périodiquement son alimentation de telle sorte que l'atmosphère du sol se renouvelle. Cette succession des phases de mise en eau et de chomage du bassin, limite l'efficience de ce dernier et surtout ne permet pas d'obtenir une dépollution poussée des eaux très fortement polluées, l'activité de la flore microbienne étant particulièrement sensible à la proportion d'oxygène disponible qui risque alors de devenir trop fréquemment insuffisante.

Par ailleurs le FR 2 358 361 décrit un procédé de traitement d'eaux usées qui consiste essentiellement à diriger celles-ci jusqu'à un réservoir disposé dans le sol et à réaliser une fluctuation périodique du niveau de l'eau polluée au sein d'un massif de gravier inclus dans le réservoir, cependant qu'il se produit un siphonnage capillaire ascendant d'une partie des eaux traitées. Dans une forme particulière de mise en œuvre de ce procédé il est prévu d'insuffler de l'air comprimé dans le fond du réservoir pour activer la décomposition des eaux usées. Cependant cette mesure est prévue uniquement dans le cadre du procédé de traitement faisant l'objet du brevet en cause, c'est-à-dire un traitement dans un réservoir contenant un massif de gravier et à l'intérieur duquel est réalisé une fluctuation périodique du niveau de l'eau pollué avec un effet de siphonnage capillaire ascendant.

Par contre la présente invention concerne un procédé qui, en retenant le principe de l'épuration des eaux polluées prétraitées par infiltration contrôlée en bassins ou en lits d'infiltration, tels que décrits précédemment, permet d'en améliorer encore l'exploitation, en renforçant leur pouvoir épurateur et en accroissant leur capacité à dégrader certaines formes de pollution généralement plus difficiles à éliminer par les procédés biologiques classiques, notamment celles résultant de certains procédés de synthèse de la chimie organique.

A cet effet l'invention a pour objet un procédé pour l'épuration des eaux polluées prévoyant de faire agir une flore microbienne aérobie dans une couche de traitement de ces eaux en effectuant un renouvellement de l'atmosphère dans cette couche, caractérisé en ce que la couche de traitement étant constituée par un lit filtrant ou par le fond d'un bassin d'infiltration contrôlée,

– on maintient non saturée cette couche filtrante,

– et on assure le renouvellement contrôlé de l'atmosphère dans cette couche filtrante en réalisant périodiquement des séquences prédéterminées, de mise en pression et/ou de mise en dépression de l'air à l'intérieur de cette couche filtrante,

– et ce, en noyant, au sein de la couche filtrante, un réseau de gaines de ventilation et en réunissant ce réseau à des moyens de mise sous pression d'air et/ou à des moyens de mise en dépression, par l'intermédiaire de moyens de contrôle assurant une mise en communication à intervalles déterminés.

L'invention concerne également un dispositif pour la mise en œuvre du procédé, simple, robuste et fiable et qui, également, présente l'avantage d'un prix de revient, à la construction du bassin, particulièrement réduit.

Ce dispositif comporte une couche de traitement constituée par un lit filtrant ou par le fond d'un bassin d'infiltration et ce dispositif est caractérisé en ce qu'il comporte au moins un réseau de gaines de ventilation, noyé au sein de la couche filtrante maintenue non saturée, ledit réseau étant réuni à des moyens de mise sous pression d'air et/ou à des moyens de mise en dépression, et ce par l'intermédiaire de moyens de contrôle assurant une mise en communication à intervalles déterminés.

De préférence, le réseau de gaines comporte au moins deux collecteurs parallèles indépendants, s'étendant au sein de la couche filtrante et sur chacun desquels sont raccordés des éléments tubulaires disposés transversalement vis à vis de ces collecteurs, ces éléments également noyés dans la couche, étant imbriqués selon qu'ils sont raccordés à l'un à l'autre collecteurs. En variante, aux éléments tubulaires sont substitués des bandes d'un matériau fibreux à forte porosité et perméabilité à l'air élevée.

Le contrôle des pressions d'air dans les collecteurs du réseau de gaines d'aération est naturellement déterminé à la demande, ou selon un processus automatisé, en fonction des paramètres de fonctionnement de la couche filtrante non saturée, en particulier selon la température, la pression régnant au sein de cette couche, la vitesse d'écoulement de l'eau, les caractéristiques des effluents à filtrer, telles que la charge polluante et la vitesse d'infiltration en fond de bassin de ceux-ci.

Le gradient de pression dans le réseau de gaines d'aération est réalisé par tout moyen connu tel que pompe à vide, turbine, colonne en charge, etc. selon les conditions d'utilisation et la nature des eaux résiduaires à dépolluer.

Dans tous les cas, le réseau de gaines d'aération permet de maintenir constante, lors de la mise en eau du bassin, le rapport établi entre le taux d'infiltration des eaux polluées et le taux de renouvellement de l'atmosphère à l'intérieur de la couche filtrante constituant le fond du bassin, puis en période de chômage du bassin, de réduire les périodes nécessaires au décolmatage du fond de celui-ci.

D'autres caractéristiques du procédé et du dispositif de filtration d'eaux polluées selon l'invention apparaîtront encore à travers la description qui suit d'un exemple de réalisation, donné à titre indicatif et non limitatif, en référence au dessin annexé sur lequel :

- La Figure 1 est une vue schématique en perspective et en coupe partielle d'un bassin d'infiltration, muni d'un réseau de gaines d'aération selon l'invention.
- La Figure 2 est une vue de détail à plus grande échelle d'une variante de réalisation du bassin selon la Figure 1.

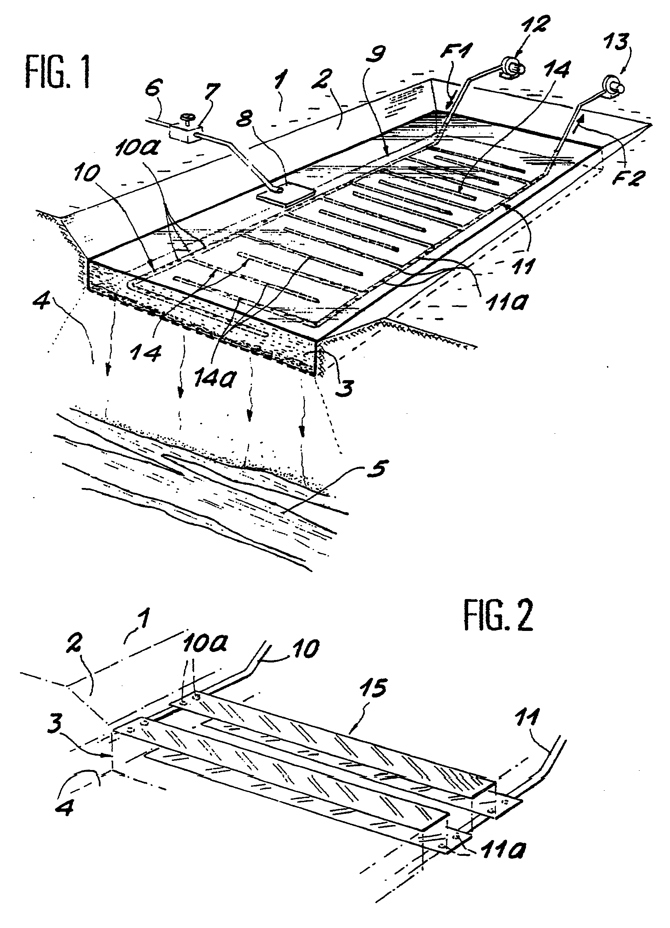

Sur la Figure 1, la référence 1 désigne une couche de terrain superficielle dans laquelle est aménagé, de façon en elle-même connue, un bassin d'infiltration 2, dont le fond 3 constitue une couche filtrante ou un lit filtrant. Ce fond 3 surmonte une formation perméable sousjacente 4, contenant elle-même en profondeur une nappe d'eau souterraine 5, étant précisé que cette structure géologique n'est nullement nécessaire à la mise en œuvre de l'invention, l'eau filtrée ayant traversé la couche de fond 3 pouvant par exemple être reprise par des moyens de soutirage et de pompage appropriés.

Le bassin d'infiltration 2 est notamment prévu pour assurer la filtration d'un débit d'eau polluée, en particulière d'une eau résiduaire, amenée au bassin par une canalisation 6 sur laquelle est montée une vanne 7, l'extrémité de la canalisation 6 étant portée au niveau de la partie supérieure 1 de la couche de fond 3 par une plaque d'appui 8, de telle sorte que l'eau polluée alimentant le bassin 2 se répande uniformément dans le bassin avec un débit approprié. Le fond 3 est constitué par une couche de gravier ou autre support poreux non saturé, par exemple du sable de rivière, dans laquelle est naturellement fixée une biomasse, contenant une flore microbienne apte à dégrader les matières organiques ou autres contenues dans l'eau à épurer qui percole lentement et regulièrement la couche 3 puis de là, la formation de terrain 4 avant de se recueillir dans la nappe 5.

Selon l'invention, afin de réaliser au sein de la couche de fond 3 et au profit de la flore microbienne qui s'y trouve naturellement fixée, un apport d'oxygène accroissant fortement son pouvoir épurateur, on dispose préalablement dans cette couche de fond 3, par exemple lors de la construction du bassin 2, au moins un réseau de gaines de ventilation 9.

Dans l'exemple considéré sur la figure 1, le réseau est constitué par deux collecteurs indépendants, parallèles, 10 et 11, respectivement réunis à l'extérieur du bassin 2 à deux pompes ou turbines 12 et 13. Ces collecteurs sont par ailleurs reliés à un ensemble d'éléments tubulaires ou gaines transversales 14 qui s'imbriquent mutuellement d'un collecteur à l'autre comme illustré sur le dessin afin de se répartir de façon approximativement uniforme dans toute l'étendue de la couche 3. Les gaines qui leur sont reliées, peuvent être ou non perforées en 10a, 11a et 14a afin de laisser échapper au sein de la couche un débit d'air approprié si le collecteur considéré est en légère pression ou au contraire aspirer un débit correspondant si le collecteur est en dépression. Ainsi à titre indicatif, on a supposé que le collecteur 10 était en pression et le collecteur 11 en dépression, les flèches F1 et F2 schématisant le sens d'écoulement de l'air respectivement refoulé et aspiré dans et hors du réseau 9.

Il en résulte, à travers les interstices de la couche filtrante et en particulier la biomasse ou flore microbienne dispersée dans celle-ci, un débit d'air sous une pression généralement faible, de l'ordre de quelques décimètres d'eau, assurant un approvisionnement en oxygène efficace du milieu épurateur et accroissant notamment de façon significative son pouvoir d'oxydation des matières organiques contenues dans l'eau percolant la couche.

Le débit d'air dans la couche peut être ajusté et contrôlé, de manière à être permanent ou discontinu, avec des phases successives de mise en pression et en dépression, selon tout processus assurant un renouvellement adéquate de l'air sousjacent au cœur de la couche perméable. Le réseau peut être réalisé de toute manière appropriée avec un nombre de gaines aussi élevé que souhaité, réparties selon la surface et l'épaisseur de la couche.

Par ailleurs, on peut prévoir plusieurs réseaux distincts, superposés ou imbriqués.

Au lieu de réaliser une alternance de phases successives de mise en pression et de mise en dépression, on peut effectuer, à intervalles déterminés, des phases de mises en pression ou des phases de mises en dépression du ou des réseaux incorporés à l'intérieur de la couche filtrante, et ce par l'intermédiaire de moyens de contrôle assurant, à intervalles voulus, les mises en communication nécessaires.

Dans la variante représentée sur la figure 2, les collecteurs 10 et 11 avec leurs orifices 10a et 11a sont associés, non plus à des gaines transversales, mais à des bandes 15 d'un matériau fibreux tissé ou non, présentant une forte porosité et une perméabilité à l'air élevée, jouant le même rôle quant à la répartition de l'air introduit dans la couche de fond 3 et à l'oxygénation de la flore microbienne inclue dans celle-ci. Ces bandes peuvent être réparties dans l'épaisseur de la couche de toute façon appropriée et, comme dans l'exemple précédent, être imbriquées les unes vis-à-vis des autres, n'importe quelle configuration particulière du réseau pouvant être envisagée selon les caractéristiques de fonctionnement du bassin ou du lit d'infiltration utilisé.

## Revendications

1. Procédé pour l'épuration des eaux polluées G prévoyant de faire agir une flore microbienne aérobie dans une couche de traitement de ces eaux en effectuant un renouvellement de l'atmosphère dans cette couche, caractérisé en ce que la couche de traitement étant constituée par un lit filtrant ou par le fond d'un bassin d'infiltration contrôlée,
   – on maintient non saturée cette couche filtrante (3),
   – et on assure le renouvellement contrôlé de l'atmosphère dans cette couche filtrante en réalisant périodiquement des séquences prédéterminées, de mise en pression et/ou de mise en dépression de l'air à l'intérieur de cette couche filtrante,
   – et ce, en noyant, au sein de la couche filtrante (3), un réseau de gaines de ventilation (9) et en réunissant ce réseau à des moyens de mise sous pression d'air et/ou à des moyens de mise en dépression (12 ou 13), par l'intermédiaire de moyens de contrôle assurant une mise en communication à intervalles déterminés.

2. Procédé selon la revendication 1, caractérisé en ce que le renouvellement de l'atmosphère dans la couche filtrante est assuré au moyen de deux réseaux distincts d'éléments tubulaires incorporés à l'intérieur de cette couche et on réalise la mise sous dépression de l'un cependant que l'autre est mis en pression ou raccordé à la pression atmosphérique.

3. Dispositif pour la mise en service du procédé selon l'une quelconque des revendications 1 et 2, comportant une couche de traitement (3) constituée par un lit filtrant ou par le fond d'un bassin d'infiltration contrôlée, caractérisé en ce qu'il comporte au moins un réseau de gaines de ventilation (9), noyé au sein de la couche filtrante (3) maintenue non saturée, ledit réseau étant réuni à des moyens de mise sous pression d'air et/ou à des moyens de mise en dépression (12 ou 13), et ce par l'intermédiaire de moyens de contrôle assurant une mise en communication à intervalles déterminés.

4. Dispositif selon la revendication 3, caractérisé en ce que le réseau de drainage (9) comporte au moins un collecteur (10–11) s'étendant au sein de la couche filtrante (3) et sur lesquels sont raccordés des éléments tubulaires (14) s'étendant transversalement vis à vis de ce collecteur.

5. Dispositif selon la revendication 4, caractérisé en ce qu'il comporte au moins deux collecteurs indépendants (10–11), les éléments tubulaires (14) raccordés à ces collecteurs étant également noyés dans la couche et imbriqués selon qu'ils se raccordent à l'un ou à l'autre collecteur.

6. Dispositif selon la revendication 5, caractérisé en ce que les moyens de contrôle des mises en communication sont agencés pour que l'un des collecteurs et le réseau correspondant d'éléments tubulaires soient mis en pression pendant que l'autre collecteur et l'autre réseau sont mis en dépression.

7. Dispositif selon la revendication 5 ou 6, caractérisé en ce qu'aux éléments tubulaires sont substituées des bandes transversales d'un matériau fibreux à forte porosité et perméabilité à l'air élevée.

8. Dispositif selon l'une des revendications 3 à 7, caractérisé en ce que le gradient de pression dans le réseau de gaines (9) est réalisé par tout moyen connu tel que pompe à vide, turbine, colonne en charge ou en dépression.

## Claims

1. Method for the purification of polluted water G which makes provision for causing an aerobic microbial flora to act in a layer for the treatment of said water by carrying out a renewal of the atmosphere within said layer, characterized in that, the treatment layer being constituted by a filtration bed or by the bottom of a controlled infiltration tank,
   – said filtering layer (3) is maintained in the unsaturated state,
   – and controlled renewal of the atmosphere in said filtering layer is ensured by periodically carrying out predetermined sequences of pressurization and/or depressurization of the air within said filtering layer,
   – this being achieved by embedding a system of ventilation ducts (9) within the filtering layer (3) and by joining said system to air pressurization means and/or to depressurization means (12 or 13) through the intermediary of control means for establishing a communication at predetermined intervals.

2. Method in accordance with claim 1, characterized in that renewal of the atmosphere in the filtering layer is carried out by means of two separate systems of tubular elements incorporated within said layer and depressurization of one system is effected whilst the other system is pressurized or connected to atmospheric pressure.

3. Device for putting into service the method in accordance with either claim 1 or claim 2, comprising a treatment layer (3) constituted by a filtration bed or by the bottom of a controlled infiltration tank, characterized in that it comprises at least one system of ventilation ducts (9) embedded within the filtering layer (3) which is maintained in the unsaturated state, said system being connected to air pressurization means and/or to depressurization means (12 or 13) through the intermediary of control means for establishing a communication at predetermined intervals.

4. Device in accordance with claim 3, characterized in that the drainage system (9) comprises at least one header pipe (10–11) which extends within the filtering layer (3) and to which are connected tubular elements (14) extending transversely with respect to said header pipe.

5. Device in accordance with claim 4, characterized in that it comprises at least two independent header pipes (10–11), the tubular elements (14) which are connected to said header pipes being also embedded in the layer and interengaged according to whether they are connected to one header pipe or to the other.

6. Device in accordance with claim 5, characterized in that the means for controlling the establishment of communication at intervals are so arranged that one of the header pipes and the corresponding system of tubular elements are pressurized whilst the other header pipe and the other system are depressurized.

7. Device in accordance with claim 5 or claim 6, characterized in that the tubular elements are replaced by transverse strips of fibrous material having high porosity and high permeability to air.

8. Device in accordance with one of claims 3 to 7, characterized in that the pressure gradient within the system of ducts (9) is produced by any known means such as a vacuum pump, turbine, column under pressure or under vacuum.

**Patentansprüche**

1. Verfahren für die Abwasserreinigung (G), versehen mit einer zu aktivierenden aeroben Mikrobenflora in einer Behandlungsschicht dieser Abwässer, indem eine Erneuerung der Atmosphäre in dieser Schicht bewirkt wird, dadurch gekennzeichnet, daß die Behandlungsschicht aus einer Filterschicht oder aus einem kontrollierten Infiltrationsgefäßboden besteht, daß diese Filterschicht (3) ungesättigt bleibt, daß die kontrollierte Erneuerung der Atmosphäre in dieser Filterschicht gesichert wird, indem periodisch vorherbestimmte Sequenzen realisiert werden, in denen Druck und/oder Unterdruck im Innern dieser Filterschicht erzeugt wird, und daß am Boden der Filterschicht (3) eine Netzhülle zur Lüftung (9) überschwemmt wird, und daß diese Hülle durch Druck und/oder Unterdruck (12 oder 13) mit Hilfe von Kontrollmitteln, die die Verbindung in vorbestimmten Intervallen ermöglicht, vereinigt wird.

2. Verfahren nach Anspruch 1, dadurch gekennzeichnet, daß die Erneuerung der Atmosphäre in der Filterschicht mit Hilfe von zwei unterschiedlichen Hüllen mit eingebauten Rohrelementen im Innern dieser Schicht ermöglicht wird, und daß der Unterdruck in der einen realisiert wird, während in der anderen Druck erzeugt wird oder diese an den Druck der Atmosphäre angeglichen wird.

3. Vorrichtung für das Verfahren nach einem der Ansprüche 1 und 2, eine Behandlungsschicht (3) aufweisend, die aus einer Filterschicht oder einem kontrollierten Infiltrationsgefäßboden besteht, dadurch gekennzeichnet, daß es mindestens eine Netzhülle zur Lüftung (9), die am Boden der Filterschicht (3) überschwemmt wird und ungesättigt bleibt, aufweist, die besagte Hülle mit Hilfe von Druck und/oder Unterdruck (12 oder 13) vereinigt wird, und daß mit Hilfe von Kontrollmitteln eine Verbindung in vorbestimmten Intervallen ermöglicht wird.

4. Vorrichtung nach Anspruch 3, dadurch gekennzeichnet, daß die Entwässerungshülle (9) mindestens ein Sammelgefäß (10 bis 11) aufweist, das sich am Boden der Filterschicht (3) erstreckt und auf dem sich die rohrförmigen Elemente (14) befinden, die sich transversal bezüglich dieses Sammelgefäßes erstrecken.

5. Vorrichtung nach Anspruch 4, dadurch gekennzeichnet, daß sie mindestens zwei unabhängige Sammelgefäße (10 bis 11) aufweist, die rohrförmige Elemente (14), die an diese Behälter angeglichen werden, gleichermaßen in der Schicht überschwemmt werden und schuppenförmig sind, je nachdem, ob sie an das eine oder das andere Sammelbecken angeglichen werden.

6. Vorrichtung nach Anspruch 5, dadurch gekennzeichnet, daß die Kontrollmittel für die Verbindung hervorstehen, damit eines der Sammelbecken und die entsprechende Hülle der rohrförmigen Elemente unter Druck gesetzt werden können, während das andere Sammelbecken und die andere Hülle unter Unterdruck gesetzt werden.

7. Vorrichtung nach Anspruch 5 oder 6, dadurch gekennzeichnet, daß die rohrförmigen Elemente durch transversale Bänder aus faserigem Material mit einer starken Gasdurchlässigkeit und Durchlässigkeit bezüglich der hohen Luft ersetzt werden.

8. Vorrichtung nach einem der Ansprüche 3 bis 7, dadurch gekennzeichnet, daß die Stärke des Drucks in der Netzhülle (9) durch alle bekannten Mittel wie Z. B. eine Pumpe, Turbine, Säule oder durch Unterdruck realisiert werden kann.

FIG. 1

FIG. 2